# EUROPEAN PATENT APPLICATION

(11) **EP 2 343 682 A1**
(43) Date of publication of application: **13.07.2011**
(21) Application number: 08877698.4
(22) Date of filing: 27.10.2008
(51) Int. Cl.: G06Q 30/00, H04W 4/02, H04W 4/18

(54) **COMMUNICATION SYSTEM, ADVERTISEMENT MANAGEMENT DEVICE, AND WIRELESS BASE STATION**

(71) Applicant: Fujitsu Limited, Kawasaki-shi, Kanagawa 211-8588 (JP)
(72) Inventor: SHINOZAKI, Atsushi, Kawasaki-shi Kanagawa 211-8588 (JP)
(74) Representative: Stebbing, Timothy Charles
(86) International application number: PCT/JP2008/069461
(87) International publication number: WO 2010/049986

(57) **Abstract**

An advertisement managing device (100) selectively notifies advertisement-related data to one or more wireless stations (20) on the basis of location information of the wireless stations (20). Each wireless station (20) attaches the notified advertisement-related data to the contents received from a contents providing device (40) and destined for a user equipment (10), and sends the resultant data to the user equipment (10). The wireless station (20) counts the number of times of the attaching and notifies the result of the counting to the advertisement managing device (110).

## Description

### [FIELD]

The embodiment is related to a communication system, an advertisement management device, and wireless base station.

### [BACKGROUND]

Recently, a microminiaturized wireless base station called a femtocell has been proposed. One of the reasons for installing femtocells in addition to wireless base station already existing is measures against blind spots. For example, installing a femtocell at a spot in a house or an office that radio waves hardly reach makes User Equipment (UE) even in the environment to receive mobile communication service.

[Patent Literature 1] Japanese Laid-open Patent Publication No. 2001-147939
[Patent Literature 2] Japanese Laid-open Patent Publication No. 2004-102475
[Patent Literature 3] Japanese Laid-open Patent Publication No. 2003-143588
[Patent Literature 4] Japanese Laid-open Patent Publication No. 2008-85512
[Patent Literature 5] Japanese Laid-open Patent Publication No. 2008-35057
[Patent Literature 6] Japanese Laid-open Patent Publication No. 2007-300588
[Patent Literature 7] Japanese Laid-open Patent Publication No. 2007-6249

### [Disclosure of Invention]

### [Problems to Be Solved by Invention]

A femtocell is complementarily used in an already-existing service area that a communication carrier provides. Therefore, even if a femtocell is installed but the femtocell does not provide special service to UEs, the femtocell does not provide additional benefits to UEs. For this reason, it does not seem that there are many cases where a user positively introduces a femtocell.

For the above, a femtocell seems to be installed for capital investment initiatively by a communication carrier, owing the cost. However, considering recent lowering communication fee, communication carrier desires to efficiently ensure and recover the cost for such additional capital investment in order to realize the investment.

### [Means To Solve the Problem]

For example, the following communication system, advertisement managing device, and wireless communication station can be used.
(1) As one of the aspects of the embodiment, a communication system including: a plurality of wireless stations; one or more user devices each of which wirelessly communicates with one of the plurality of wireless stations; a media (*sic*, correctly contents) providing device that provides media data (*sic*, correctly contents) that each of the user devices requests to the user device via one of the plurality of wireless stations; and an advertisement managing device that manages advertisement-related data including data related to at least one of an advertisement and a questionnaire to the user device, wherein the advertisement managing device selectively notifies one or more of the plurality of wireless stations of the advertisement-related data on the basis of information about locations of the plurality of wireless devices, the one or more wireless stations attach the advertisement-related data notified by the advertisement managing device to the contents destined for the user devices, the media data (*sic*, correctly contents) being received by the media (*sic*, correctly contents) providing device, and sends the contents attached the advertisement-related data to the user device, and count the number of times of attaching the advertisement-related data for the user device and notifies the result of counting to the advertisement managing device.

(2) As another aspects of the embodiments, an advertisement managing device includes: a selecting unit that selects one or more of the plurality of wireless stations to be notified of the advertisement-related data on the basis of information about locations of the plurality of wireless stations; and a notification unit that notifies the wireless stations selected by the selecting unit of the advertisement-related data.

(3) As an additional aspects of the embodiments, a wireless station included in the communication system, the wireless station including a transmitting unit that attaches the advertisement-related data notified by the advertisement managing device to the contents destined for the user devices, the media (*sic*, correctly contents) being received by the media data (*sic*, correctly contents) providing device, and sends the contents attached the advertisement-related data to the user device; a counting unit that counts the number of times of attaching the advertisement-related data for the user device for a predetermined time period; and a notifying unit that notifies the result of the counting to the advertisement managing device.

### [Effect of Invention]

It is possible to efficiently acquire costs for wireless base stations.

### [Brief Description of Drawing]

[Fig. 1] A diagram illustrating an example of a communication system according to an embodiment;
[Fig. 2] A diagram illustrating a detailed example of the communication system of Fig. 1 in detail;
[Fig. 3] A sequence diagram illustrating a first method of distributing an advertisement in a communication system of the embodiment;
[Fig. 4] A sequence diagram illustrating a second method of distributing an advertisement in a communication system of the embodiment;
[Fig. 5] A flowchart illustrating an example of procedure of obtaining an advertisement URL list in a femtocell according to the embodiment;
[Fig. 6] A diagram illustrating an example of information stored and managed in an advertisement managing server of the embodiment;
[Fig. 7] A diagram illustrating an example of message parameters transmitted from a femtocell of the embodiment to an advertisement managing server;
[Fig. 8] A diagram illustrating another example of message parameters transmitted from a femtocell of the embodiment to an advertisement managing server;
[Fig. 9] A diagram illustrating an example of information stored and managed in a femtocell of the embodiment;
[Fig. 10] A diagram illustrating another example of information stored and managed in a femtocell of the embodiment;
[Fig. 11] A diagram illustrating an example of information (related to user category) stored and managed in a femtocell managing server of the embodiment;
[Fig. 12] A diagram illustrating an example of information (related to area) stored and managed in a femtocell managing server of the embodiment;
[Fig. 13] A diagram illustrating an example of message parameters transmitted and received between a femtocell managing server and an advertisement managing server in the embodiment;
[Fig. 14] A diagram illustrating an example of a sequence of streaming playback in a communication system in the embodiment;
[Fig. 15] A diagram illustrating an example of rewriting a metafile in a femtocell of the embodiment;
[Fig. 16] A flow diagram illustrating an example of a procedure of rewriting a metafile in a femtocell of the embodiment;
[Fig. 17] A diagram illustrating an example of information stored and managed in a femtocell of the embodiment;
[Fig. 18] A sequence diagram illustrating an example of a method of distributing an advertisement of the embodiment, focusing on a procedure of rewriting a metafile;
[Fig. 19] A diagram illustrating an example of setting information of advertisement distribution policy to a femtocell of the embodiement;
[Fig. 20] A flow diagram illustrating an example of a procedure of rewriting a metafile on the basis of advertisement distribution policy at a femtocell of the embodiment;
[Fig. 21] A block diagram illustrating an example of an advertisement managing server of the embodiment;
[Fig. 22] A block diagram illustrating an example of an femtocell managing server of the embodiment;
[Fig. 23] A block diagram illustrating an example of a femtocell of the embodiment; and
[Fig. 24] A block diagram illustrating an example of a femtocell of the embodiment.

### [DESCRIPTION OF REFERENCE CHARACTERS]

- 10: user equipment (UE)
- 20: advertisement inserting device (femtocell)
- 201: wired communication processor
- 202: wireless communication processor
- 203: memory
- 204: notifying unit
- 205: controller
- 251: metafile detector
- 252: URL memory
- 253: IMSI extracting unit
- 30: LAN
- 40: contents providing device (media data providing device, contents server)
- 50: exsiting wireless station (BS)
- 60: access line
- 70: mobile communication network
- 80: ISP
- 90: Internet
- 100: managing device (femtocell managing server)
- 101: advertisement managing server communicating unit
- 102: femtocell location information managing unit
- 103: user category memory
- 104: controller
- 110: advertisement managing server
- 111: femtocell communication unit
- 112: femtocell managing server communication unit
- 113: memory
- 114: controller
- 120: network (switch)
- 121: broadband router

### [BEST MODE TO CARRY OUT INVENTION]

Hereinafter, description will now be made in relation to embodiment and modifications with reference to accompanying drawings. However, the embodiment and modifications to be detailed below are merely example, so there is no intention of excluding another embodiments and variations and application of techniques that are not mentioned in this specification. In other words, various changes and modifications (e.g., combination of the embodiments and the modifications) can be suggested without departing from the spirit the embodiments.

### (example of system configuration)

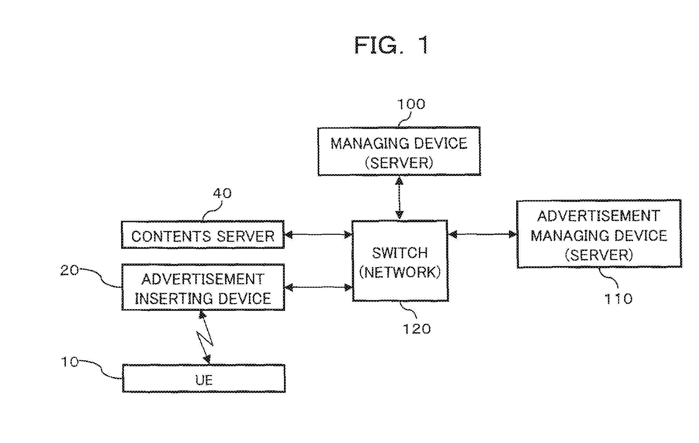

Fig. 1 is an example of a communication system according to a first embodiment. The communication system of the first embodiment exemplarily includes one or more users equipment (UEs) 10, one or more contents servers (*sic,* correctly providing devices) 40, one or more advertisement inserting devices 20, a managing device 100 that manages the advertisement inserting devices 20, an advertisement managing device 110, and a switch (network) 120.

The switch 120 communicably connects entities of the communication systems, i.e., one of the entities that communicable connects the advertisement inserting devices 20, the contents providing devices 40, the managing device 100, and the advertisement managing device 110 with one another, and provides communication routes between two of the entities.

The contents providing device 40 stores and manages one or more contents (data) containing one of or any combination of image, voice, and music. An example of contents includes data of one of or a combination of two or more of image (still image and/or moving image), characters, voice, and music.

The contents providing device 40 transmits contents that the contents providing device 40 possesses to a UE 10 in response to an access (request) from the UE 10. The access is made through the use of information, such as a URL (Uniform Resource Locator), representing the location where the contents are stored. The contents providing device 40 is exemplified by a personal computer (PC) or a server,

The UE 10 is capable of wireless communication with the advertisement inserting device 20. The UE 10 can be any device only if the device is capable of wirelessly transmitting and receiving data to and from the advertisement inserting device 20. Examples of the UE 10 are a mobile telephone, a laptop computer equipped with a wireless interface, and a radio device mounted in a vehicle. The UE 10 is not limited to a mobile station, and therefore may be a fixed communication device connected to a LAN 30, i.e., a desktop PC, a server, or a so-called digital household appliance. Wireless communication between the UE 10 and the advertisement inserting device 20 can be accomplished by any known wireless communication schemes including the W-CDMA (Wideband-Code Division Multiple Access) scheme.

The UE 10 accesses a contents providing device 40 via an advertisement inserting device 20 and the switch 120 and thereby receives image contents and voice (music) contents, which are to be reproduce. The reproduction includes image displaying and/or voice outputting. At that time, the advertisement inserting device 20 can notify the UE 10 of contents (hereinafter called advertisement contents) that is an example of advertisement-related data in conjunction of the image and/or voice contents.

The advertisement contents includes data related to an advertisement and/or a questionnaire to a UE 10. The UE 10 may be notified of the contents of the advertisement or the URL indicating the location where the contents of the advertisement are stored. Thereby, when the UE 10 receives and reproduces the contents, such as image, from the contents providing device 40 on a predetermined application such as a media player, the advertisement contents can also be reproduced.

The advertisement contents are managed by, for example, the advertisement managing device 110. The advertisement contents itself may be stored in the advertisement managing device 110 or in another device. If the contents are stored in another device, the advertisement managing device 110 satisfactorily stores and manages information indicating the point (location) at which the advertisement contents are stored, such as the URLs. The advertisement managing device 110 may be a PC or a server.

The managing device 100 manages information (location information) about a position where each advertisement inserting device 20 is installed and information about the UEs 10 (users) using the advertisement inserting devices 20. The managing device 100 may also be a PC or a server.

The information about the UEs 10 includes information (UE-ID) capable of identifying each individual UE 10 and information about the category (user category) of each UE 10 (user). An example of a UE-ID is an IMSI (International Mobile Subscriber Identity). The user category information is one of or a combination of two or more of gender, age (e.g., teenager, twenties, ..., fifties), and occupation (e.g., student, worker, housewife).

An advertisement inserting device 20 adaptively selects the advertisement contents (URL) destined for a UE 10 from the advertisement managing device 110 on the basis of the information that the managing device 100 manages. Unlimited examples are distribution of advertisement related to the area where the advertisement inserting device 20 is installed on the basis of the location information of the advertisement inserting device 20, or distribution of advertisement suitable for the gender, the age, and the occupation of the user of each UE 10 on the basis of the user category.

The advertisement inserting device 20 counts and manages the number of times of distributing an advertisement, for example, for each URL of advertisement contents or for each UE 10. The information of the number of times of distributing an advertisement can be provided to the advertiser as one of the information pieces that will contribute to marketing strategy of the advertiser.

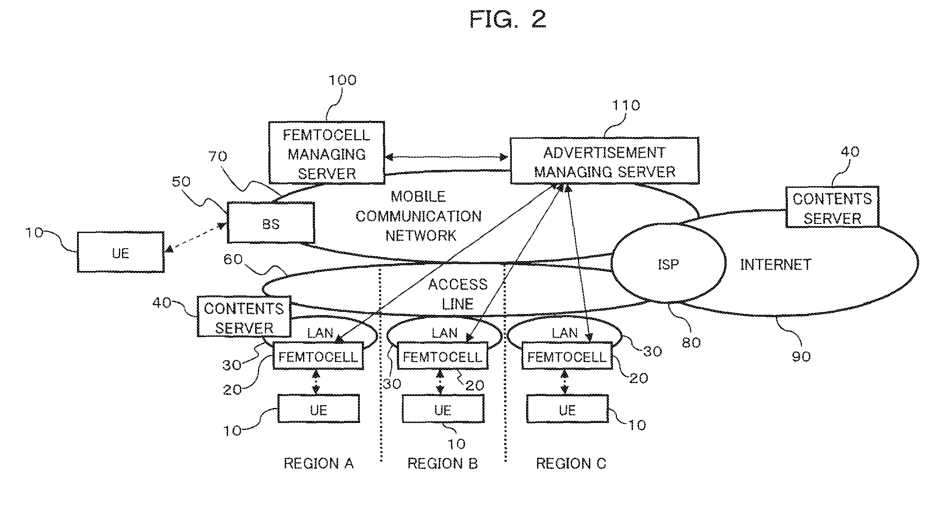

The advertisement inserting device 20 can be installed into, for example, a small base station called a femtocell. Fig. 2 illustrates an example of the configuration of the system of this case. In Fig. 2, an example of each advertisement inserting device 20 is a femtocell; an example of the managing device 100 is a femtocell managing server; an example of the contents providing device 40 is a contents server; an example of the advertisement managing device 110 is an advertisement managing server; and an example of the network 120 is LANs 30, a mobile network 70, an access line 60, and Internet 90.

A femtocell 20 is assumed to be installed in a house or an office, serving as a complement to the service that a base station (BS) 50 installed outdoors provides. Fig. 2 illustrates three femtocells 20 installed one in each of areas A through C.

Since a femtocell 20 plays a role of a complement to the service area (macrocell) of a BS 50 alrady installed, a femtocell has a cell radius and the number of simultaneously connectable devices that are smaller those of a macrocell. For example, a macrocell has a cell radius of a several kilometers while a femtocell has a cell radius of a several meters to a several dozen meters. Furthermore, the number of devices simultaneously connectable is small to be several devices.

For the above, since a limited number of UEs 10 can simultaneously use a femtocell, a UE 10 can exclusively use a more wireless resources (e.g., frequency) in the service area of a femtocell 20 as compared with that in a macrocell.

In a macrocell that covers a large number (e.g., several dozen or several hundred) of UEs 10 in a large radius of several kilometers, a single wireless resource is shared by a number of UEs 10, which brings a large advantage to a femtocell 20. Accordingly, a femtocell less lowers communication rate due to sharing wireless resources than a macrocell and therefore can be expected a higher-speed communication than outdoor environment.

The above properties of a femtocell 20 attracts a service providing a large capacity data (contents) such as images to not only fixed communication terminals such as PCs but also to UEs 10 (for example, by means of streaming distribution). An example of such a service is Internet Protocol TeleVision (IPTV), which is a service that distributes digital television broadcast through an IP and is expected to be killer contents of Next Generation Network (NGN).

Furthermore, since the number of UEs can simultaneously use a femtocell 20 is limited, application of an advertisement inserting device 20 to a femtocell allows processing and managing related to distribution of advertisement contents to UEs 10 to be decentralized to respective femtocells each having a small service area and a small number of accommodating UEs. Accordingly, load caused by processing and managing of distributing advertisement contents to UEs 10 can be reduced as compared with the case the advertisement managing server 110, the contents server 40 or another server or device solely manages and carries out the distribution.

Hereinafter, a detailed description is made in relation to the communication system illustrated in Fig. 2.
One of the installation of the femtocell 20 is connecting the femtocell 20 to a router (not illustrated) already installed in a house or an office. The router provides the access line 60 serving as a logical communication route to a mobile communication network 70 and an ISP (Internet Service Provider) 80 (Internet 90).

An example of the access line 60 is a broadband line such as an Asymmetric Digital Subscriber Line (ADSL), a Community Antenna TeleVision (CATV), or an optical communication line. A router that accommodates a broadband communication line is called a broadband router, which makes a femtocell 20 possible to provide a communication route with a femtocell 20 and a UE 10, the mobile communication network 70, or the ISP 80 (Internet 90) via the broadband line 60, such as ADSL, CATV, or an optical communication line.

The femtocell 20 is capable of further providing a communication route between a communication device (e.g., a PC or the contents server 40) connected to the LAN (Local Area Network) 30 that the broadband router forms and a UE 10. A femtocell 20 functioning as an access point (AP) of an UE 10 makes the UE 10 possible to communicate with a PC or other device on the LAN 30 through the Ethernet (registered trademark) without requiring the mobile communication network 70. Alternatively, a femtocell 20 can provide a communication route through which a UE 10 directly accesses (i.e., without passing through the mobile communication network 70) the ISP 80 and the contents server 40 on the Internet 90 via the broadband line 60.

The contents server 40 stores and manages one or more pieces of contents including image or voice (music), and distributes the contents in response to a request designating a URL or others from a UE 10. The contents server 40 stores and manages a metafile for each piece of contents, and can send the corresponding metafile to the UE 10 that issues the request before sending the contents to the UE 10. A metafile describes information designating an instruction to start an application, such as a media player of the UE 10 that issues the request, and a designation of a display layout on the UE 10.

A place where the contents server 40 is installed is not limited and is satisfactorily a place that a UE 10 can access. For example, the contents server 40 may be connected to the LAN 30 in which a femtocell 20 is installed or may be connected to a network (the Internet 90 or another LAN 30) except for the LAN 30 in which the femtocell 20 is installed.

The femtocell managing server 100 manages each femtocell 20. A place where the femtocell managing server 100 is installed is not also limited. The femtocell managing server 100 may be one of the facilities that a mobile communication carrier (carrier) manages and connected to the mobile communication network 70, or may be one of the facilities that the ISP 80 manages and connected to the Internet 90. Fig. 2 illustrates the former case. In either case, the femtocell managing server 100 can communicate with each femtocell 20 via the access line 60.

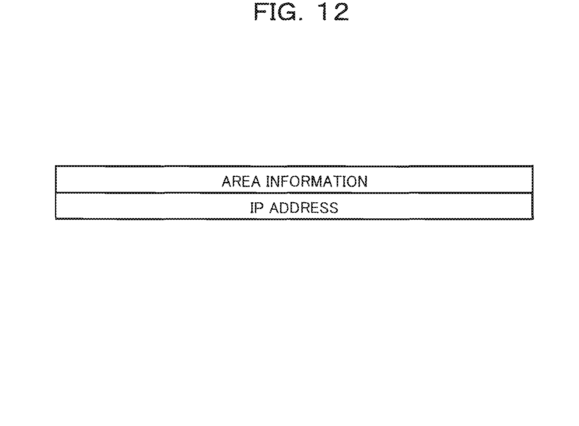

Information that the femtocell managing server 100 manages includes information (location information) of a location where each femtocell 20 is installed and information of a UE 10 connecting to each femtocell 20. The location information of each femtocell 20 is exemplified by address information such as IP address, geographical information (area information) that specifies the area where the femtocell 20 is installed, or information (see Fig. 12) that associates the address information and the area information with each other.

The area information can be expressed in units of prefecture, such as Kanagawa Prefecture, units of city or ward, such as Yokosuka City, or other units, such as distinct smaller than the above examples, building, floor level, or floor. Alternatively, the above units may be appropriately combined.

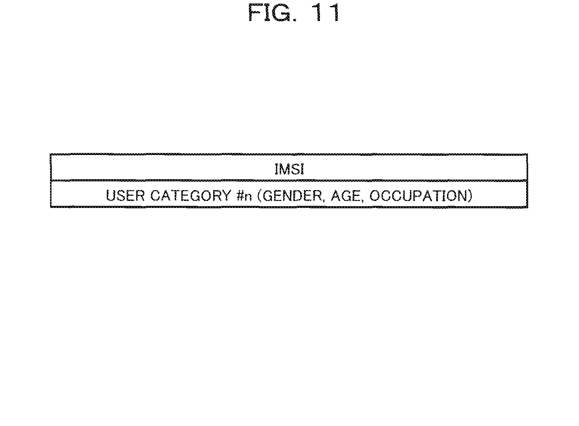

The information about a UE 10 includes user category information (one or a combination of two or more of gender, age, and occupation). The femtocell managing server 100 stores and manages the user category information in association with the identification (UE-ID) of each UE 10 (i.e., user). An example of a UE-ID is IMSI (see Fig. 11).

The advertisement managing server 110 stores and manages one or more pieces of advertisement contents to be provided to UEs 10. The advertisement contents include one of or a combination of two or more of image (still image and/or moving image), voice, and music. Image includes a so-called banner. In response to a request designating a URL or another indicator, the advertisement managing server 110 sends an advertisement banner to the UE 10 that issues the request and streaming distributes image contents for advertisement to the UE 10. Furthermore, the advertisement managing server 110 stores and manages area information about area to which an advertiser wishes to distribute advertisement contents.

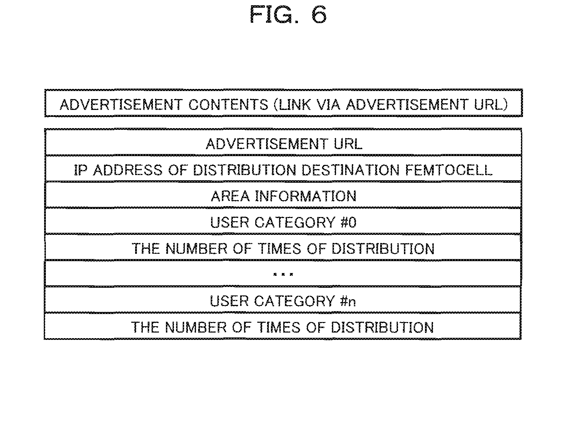

Fig. 6 illustrates an example of information that the advertisement managing server 110 stores and manages. As illustrated in Fig. 6, the advertisement managing server 110 exemplarily manages and stores advertisement contents, an advertisement URL, address information (e.g., IP address) of a distribution destination femtocell 20, area information to which an advertiser wishes to distributes advertisements, the number of times of distributing an advertisement, and a category (user category) of UE 10 to which the advertisement was distributed. The number of times of distributing an advertisement can be stored and managed for each of user categories #0 through #n (where, n is an integer of one or more). The user categories may be previously retained as setting information, or may be obtained from the femtocell managing server 100 to be detailed below.

The area information (hereinafter also called advertisement distributing desired area information) can be expressed in units of prefecture, such as Kanagawa Prefecture, units of city or ward, such as Yokosuka City, or other units, such as distinct smaller than the above examples, building, floor level, or floor. Alternatively, the above units may be appropriately combined.

A place where the advertisement managing server 110 is installed is not also limited. The advertisement managing server 110 may be one of the facilities that a carrier manages and connected to the mobile communication network 70, or may be one of the facilities that the ISP 80 manages and connected to the Internet 90. Fig. 2 illustrates the former case. In either case, the advertisement managing server 110 can communicate with each femtocell 20 via the access line 60. The communication makes the advertisement managing server 110 possible to appropriately provide advertisement contents (URL) that the advertisement managing server 110 stores and manages to a femtocell 20.

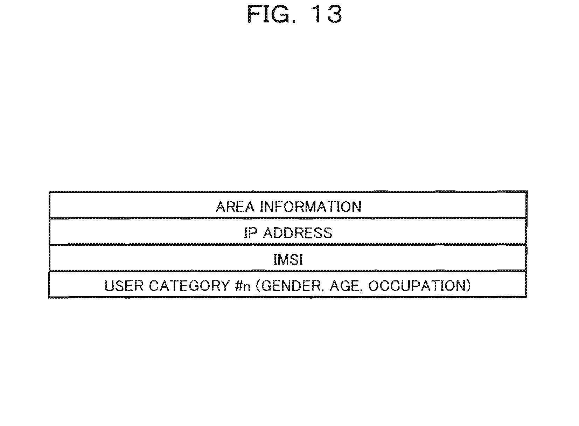

The advertisement managing server 110 is capable of communicating with the femtocell managing server 100. Though the communication, the advertisement managing server 110 receives information that each femtocell 20 stores and manages, and provides such information received from the femtocell 20 to the femtocell managing server 100. Fig. 13 illustrates an example of message parameters sent and received by the communication between the advertisement managing server 110 and the femtocell managing server 100.

In Fig. 13, the area information is information (advertisement distributing desired area information) that the advertisement managing server 110 transmits to the femtocell managing server 100. Upon receipt of the advertisement distributing desired area information, the femtocell managing server 100 replies to the advertisement managing server 110 with IP addresses of one or more femtocells 20 installed in an area that the received area information indicates on the basis of, for example, information exemplified in Fig. 12.

The advertisement managing server 110 receives the IP addresses and thereby determines the femtocells 20 to be distributed the advertisement contents (URL) to. In some cases, the advertisement managing server 110 sends IMSIs to the femtocell managing server 100. Upon receipt of the IMSI, the femtocell managing server 100 replies to the advertisement managing server 110 with user category information specified by the received IMSIs.

A part of or the entire part of the function of the femtocell managing server 100 and a part of or the entire part of the function of the advertisement managing server 110 may be integrated.

A UE 10 can receive contents such as image from a contents server 40 through accessing the contents server 40 via a femtocell 20. A UE 10 is equipped with an application such as a browser or a media player capable of displaying or reproducing received contents, and the application carries out so-called streaming reception or reproduction of contents.

In the first embodiment, the femtocell 20 attaches (inserts) the advertisement URL to contents received from the contents server 40 and destined for a UE 10. Furthermore, the femtocell 20 is capable of counting the number of times of inserting (distributing) an advertisement URL to which UE 20 (*sic*, correctly 10) and notifying the count to the advertiser.

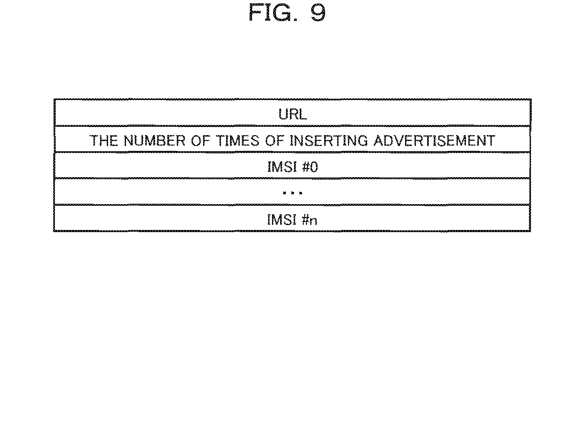

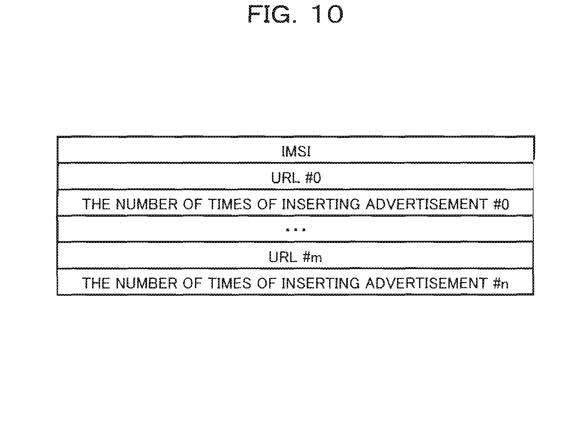

For this purpose, the femtocell 20 counts the number of times of inserting an advertisement, that is, the number of times of distributing (notifying) an advertisement, for each pieces of advertisement contents (advertisement URL) or for each UE 20 (*sic,* correctly 10), and stores and manages the information of the counting. Non-limited examples are illustrated in Figs. 9 and 10. Fig. 9 illustrates an example of managing the number of distributing and destination UEs 20 (*sic*, correctly 10) (IMSIs #0 through #n) for each advertisement URL while Fig. 10 illustrates an example of managing the number of times of distributing each advertisement URL #0 through #m (where m is an integer of one or more) for each UE 20 (*sic*, correctly 10) (each IMSI).

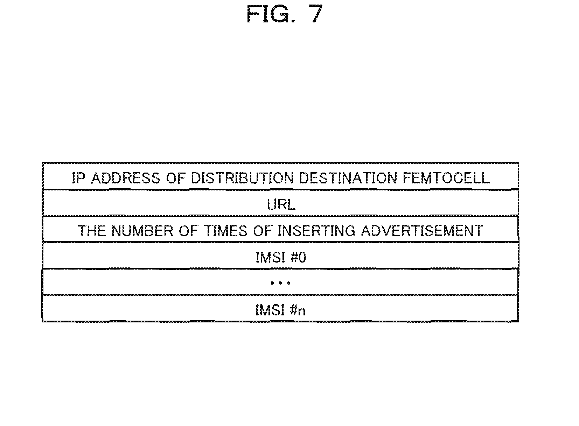

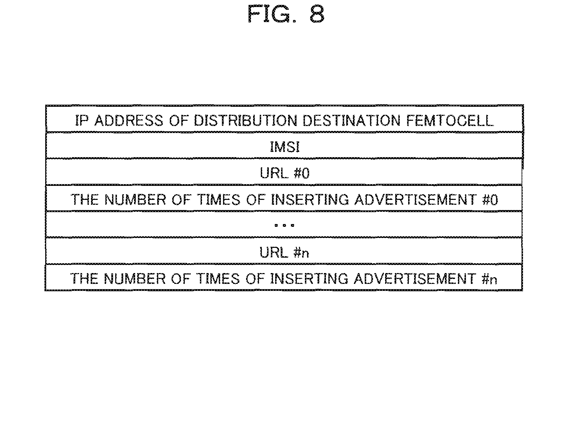

These pieces of information can be appropriately notified to the advertisement managing server 110. Examples of message parameters to be used for this notification are illustrated in Figs. 7 and 8. Either message sets the IP address of a femtocell 20 that receives a distributed advertisement contents (URL) to be the transmitting source address, and sets information having an identical format in Fig. 9 or 10 to be the body of the message.

Inserting of an advertisement URL by a femtocell 20 can be accomplished by, for example, rewriting a metafile, to be sent to a UE 10 before the contents server 40 sends the contents to the UE 10. The metafile is used for activating a predetermined application, such as the browser or the media player, of the UE 10 or designating a display layout. Inserting an advertisement URL into such a metafile makes an application possible to receive and reproduce the advertisement contents designated by the inserted advertisement URL when the UE 10 is receiving and reproducing streaming contents by means of the application.

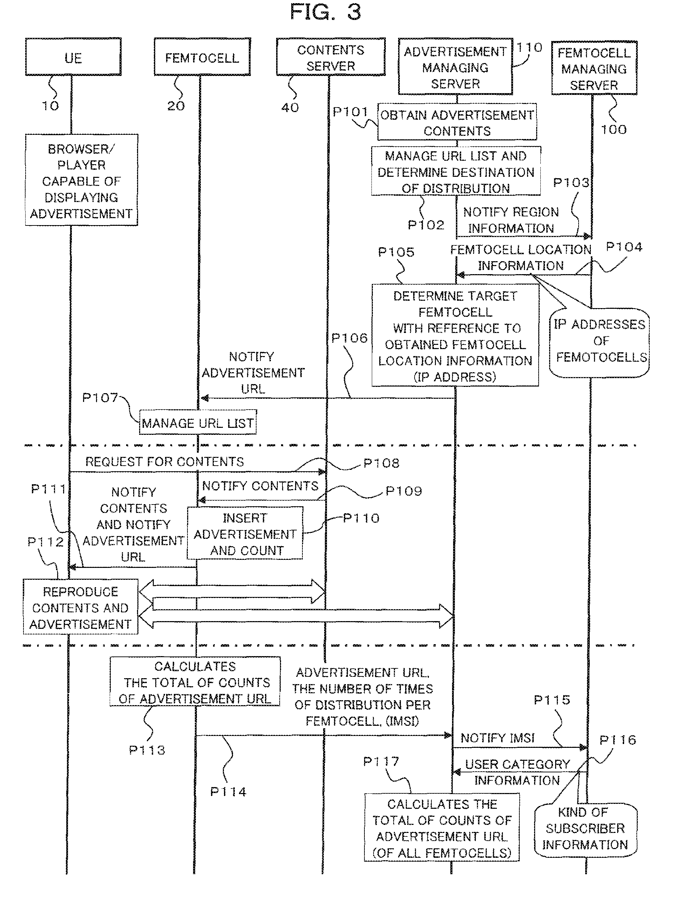

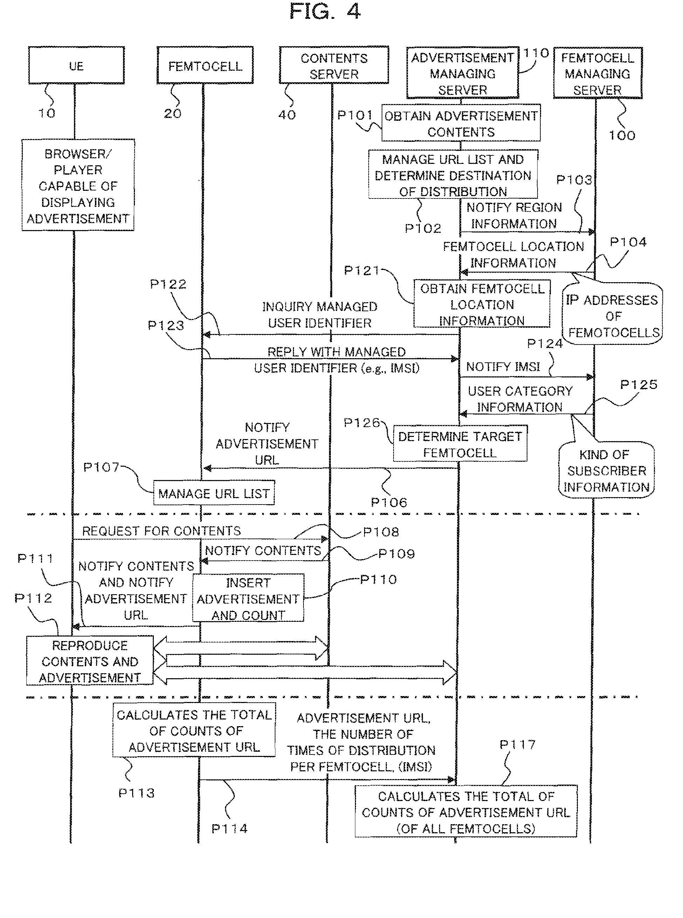

Hereinafter, examples of a method of distributing an advertisement in the above communication system will now be described with reference to sequence diagrams Figs. 3 and 4. Fig. 3 exemplarily illustrates a sequence related to a first method of distributing an advertisement; and Fig. 4 exemplarily illustrates a sequence related to a second method of distributing an advertisement.

### (first method of distributing an advertisement)

As exemplified in Fig. 3, the advertisement managing server 110 obtains and stores advertisement contents (step P101); generates and manages a URL list of advertisement contents; and concurrently sets (determines) advertisement distributing desired area information (step P102). The advertisement managing server 110 can creates one or more pieces of advertisement contents and also one or more pieces of the advertisement distributing desired area information based on, for example, information provided from the advertiser.

The advertisement managing server 110 notifies one or more pieces of the advertisement distributing desired area information to the femtocell managing server 100 (step P103). Upon receipt of the notification, the femtocell managing server 100 obtains the IP addresses of one or more femtocells 20 corresponding the notified area information and replies to the advertisement managing server 110 with the obtained IP addresses (step P104).

The advertisement managing server 110 determines the IP addresses of one or more femtocells 20 that are to insert the advertisement URL among the IP addresses obtained from the femtocell managing server 100 (step P105), and notifies the femtocells 20 having the selected IP addresses of the advertisement URL that the advertisement managing server 110 is asking to distribute (step P106).

Upon receipt of an advertisement URL from the advertisement managing server 110, each of the femtocells 20 stores and manages the received advertisement URL (step P107) by means of, for example, a list (table).

After that, when a UE 10 issues a request for contents to the contents server 40 through a femtocell 20 (step P108), the contents server 40 sends the femtocell 20 the contents that the UE 10 requests (step P109). When the UE 10 accesses the contents server 40 to receive the contents, the femtocell 20 can recognize the IMSI. The recognition is realized by, for example, managing the IP address provided to the UE 10 and the IMSI in association with each other.

When the femtocell 20 is sending (relaying) the contents received from the contents server 40 to the UE 10, the femtocell 20 inserts (notifies) the advertisement URL notified from the advertisement managing server 110 into the contents. Furthermore, the femtocell 20 counts the number of times of inserting the same advertisement URL and stores and manages the result of counting in combination with the IMSI of UEs 10 as exemplified in Fig. 9 or 10 (steps P110 and P111). The detailed processing performed in the femtocell 20 will be described below.

The UE 10 receives and reproduces the contents received from the contents server 40 via the femtocell 20, using a predetermined application (step P112). At that time, the UE 10 may access the advertisement managing server 110 in accordance with the advertisement URL notified from the femtocell 20 and thereby receive and reproduce the advertisement contents. The advertisement contents may be reproduced through the same application or through another application. Any application can be used if the application is capable of reproducing the advertisement contents. For example, the advertisement contents may be reproduced on a part of the window of a browser or a media player that is capable of reproducing the contents from the contents server 40 or may be reproduced on a different window.

The femtocell 20 continues counting the number of times of inserting (notifying) the advertisement URL to UEs 10 and the number of times of notification for a predetermined time period (e.g., for one month). Upon expiring the predetermined time period, the femtocell 20 calculates advertisement URLs notified to UEs 10 during the time period, the number of times of notification, and the number of notified IMSIs (step P113), and notifies the result of the calculation in the form being illustrated in Fig. 7 or 8 to the advertisement managing server 110 (step P114).

Upon receipt of notification of one or more IMSIs from the femtocell 20, the advertisement managing server 110 notifies the same IMSIs to the femtocell managing server 100 to request the corresponding user category information (step P115).

The femtocell managing server 100 obtains user category information (Fig. 11) corresponding to the one or more IMSIs notified from the advertisement managing server 110 and notifies the obtained user category information (step P116). The notification may take a form of a predetermined codes (identifiers) representing user categories, such as gender, age, and occupation.

The advertisement managing server 110 calculates the total of the results of the counting notified from the respective femtocells 20 on the basis of the user category information obtained from the femtocell managing server 100 (step P117). For example, the advertisement managing server 110 calculates the total of the counts of times of distributing an advertisement for each user category which counts are notified from the respective femtocells 20. The result of the calculation is appropriately provided to the advertiser, which thereby can grasp which advertisement URL is distributed to which users at which frequency.

The carrier (e.g., the mobile communication carrier) that manages the femtocells 20 and/or the advertisement managing server 110 can collect a consideration for such advertisement distribution service from the advertiser. The collected consideration can be applied to installation and maintenance of the femtocells 20.

Accordingly, the communication carrier can efficiently acquire (ensure, recover) the cost matching capital investment of the femtocells 20, which improves the finances of the communication carrier and enables the femtocells 20 to become widespread.

### (second method of distributing an advertisement)

In the first method of distributing an advertisement, the advertisement managing server 110 equally selects all the femtocells 20 locating in the advertisement distribution desired area to be targets to be notified of the advertisement URL. Alternatively, targets to be notified of the advertisement URL may be limited to some of the femtocells 20 locating in the advertisement distribution desired area on the basis of, for example, the user category information. An example of the sequence is illustrated in Fig. 4.

In Fig. 4, the processing of step P101 through step P104 is the same as that of first method of distributing an advertisement. The advertisement managing server 110 that receives location information (e.g., one of more IP addresses) of one or more femtocells 20 from the femtocell managing server 100 in step P121 issues an inquiry about UE-IDs (e.g. IMSIs) registered and managed in each of the femtocells 20 corresponding to the received IP address to the femtocells 20 (step P122). If the femtocell managing server 100 manages IMSIs registered (managed) in each femtocell 20, the advertisement managing server 110 may issue the inquiry to the femtocell managing server 100.

The femtocell 20 (or the femtocell managing server 100) replies to the advertisement managing server 110 with the IMSIs managed by the same femtocell 20 (step P123). If the same femtocell 29 (*sic*, correctly 20) manages no IMSI, the femtocell 20 (or the femtocell managing server 100) may not reply or may reply to the advertisement managing server 110 with the absence of IMSI. Alternatively the femtocell 20 may autonomously notify IMSIs to the advertisement managing server 110 at predetermined timings or periodic timings convenient to the femtocell 20 itself, irrespective of the presence or the absence of the inquiry. Timings convenient to the femtocell 20 are, for example, timings at which the processing load on the femtocell 20 is a predetermined threshold or less.

The advertisement managing server 110 notifies the one or more IMSIs obtained from the femtocell 20 (or the femtocell managing server 100) to the femtocell managing server 100 and thereby request the user category information (step P124).

The femtocell managing server 100 obtains one or more pieces of the user category information (see Fig. 11) corresponding to the IMSIs notified from the advertisement managing server 110 and notifies the obtained pieces of the category information to the advertisement managing server 110 (step P125). The notification may take a form of predetermined codes (identifiers) representing user categories, such as gender, age, and occupation.

The advertisement managing server 110 determines one or more target femtocells 20 to be notified of an advertisement URL on the basis of the obtained pieces of the user category information. For example, one or more femtocells 20 that are accommodating UEs 10 belonging to a user category to which the advertiser wishes to distribute the advertisement are determined to be the target to be notified of an advertisement URL (step P126). That can narrow targets to be notified of the advertisement URL to UEs 10 belonging to the user category that the advertiser wishes to distribute the advertisement URL.

The narrowing (selection) may be based on user setting information representing the request from each UE 10. An example of the information is various pieces (e.g., advertisement distribution desiring (or blocking) time) of setting information related to distribution of advertisement contents, and may be obtained from the femtocell 20 (or the femtocell managing server 100) as substitute for IMSIs or in addition to IMSIs.

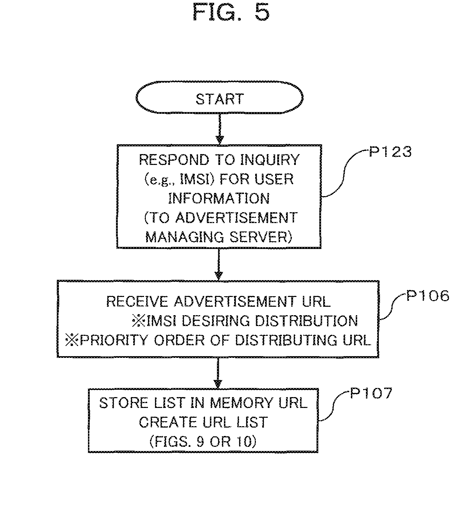

The advertisement managing server 110 notifies the advertisement URL to the one or more femtocells 20 determined to be the targets to be notified of the advertisement URL (step P106). At that time, as exemplarily illustrated in Fig. 5, the advertisement managing server 110 may notify distribution desiring IMSIs to the femtocells 20 along with the advertisement URL. If a number of UEs 10 are accessing a single femtocell 20, the IMSIs can be use to select only one or more UEs 10 that wish to be distributed the data contents as the target of distributing the advertisement among the UEs 10 accessing the femtocell 20. Alternatively or additionally, the advertisement managing server 110 may notifies information representing the priorities of advertisements to be distributed to the femtocells 20. If the priorities are determined in advance and notified to a femtocell 20, the femtocell 20 can determine the order of distributing advertisements on the basis of the information about the priorities.

Upon receipt of an advertisement URL from the advertisement managing server 110, the femtocell 20 stores and manages the received advertisement URL by means of, for example, a list (step P107 in Figs. 4 and 5).

After that, when a UE 10 accesses the contents server 40 through the femtocell 20 to receive the contents, counting of notification of an advertisement URL to UEs 10, counting of the number of times of notification, and the calculation of the total counts are carried out in the same manner as the first method of distributing an advertisement (steps P108 through P114 and step P117 in Fig.3). In this method, the user category information that can be used for the calculation is already obtained from the femtocell managing server 100.

The information to be calculated may include information related to time of distributing an advertisement (i.e. notifying an advertisement URL) and policy of inserting (notifying) an advertisement URL, which are however not illustrated. Thereby, it is possible to prepare a compensation for the target of distributing an advertisement being a user employing unlimited streaming through the use of a PC on the LAN 30.

As the above, femtocells 20 locating in an area to which the advertiser wishes to distribute an advertisement are narrowed to one or more femtocells 20 accommodating UEs 10 belonging to a predetermined user category and the one or more femtocells 20 selectively distribute the advertisement by means of the advertisement URL and are requested for the calculation. Accordingly, the second method can attain the same effects and advantages as those of the first method of distributing an advertisement, and can more efficiently distribute an advertisement as compared with the first method.

### (specific example of processing of inserting an advertisement)

Next, description will now be made in relation to a specific example of inserting an advertisement by a femtocell 20.
The contents server 40 retains image contents or voice (music) contents and having a predetermined streaming distributing function (application). Examples of the application are Windows Media (registered trademark) and Real. Streaming distribution uses a predetermined streaming protocol, which is exemplified by HTTP (Hypertext Transfer Protocol), WMP, and RTP (Real-time Transport Protocol).

An access to contents that the contents server 40 manages is accomplished by means of a URL. When a UE 10 is making an access, the UE 10 accesses the metafile (".wvx" for Windows Media and ".ram" for Real) that activates a player, such as Windows Media Player or Real Player (registered trademark).

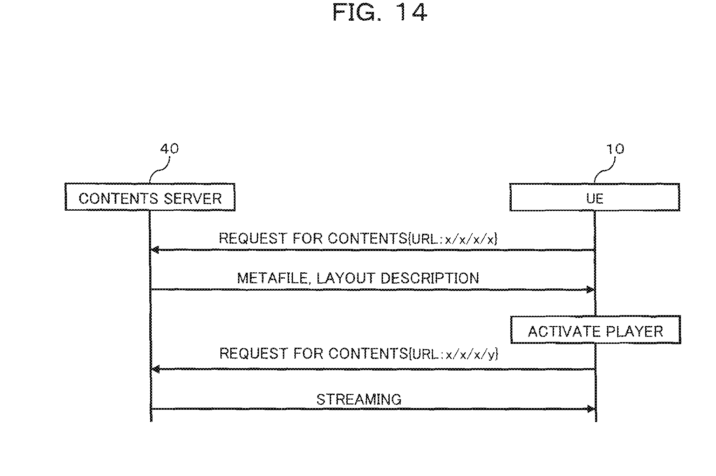

A metafile stores (describes) information related to a display layout when the media player reproduces contents, and a URL of the contents to be reproduced. For the above, metafiles are prepared one for each individual pieces of contents, and are managed by the contents server 40. Streaming playback is carried out by, for example, the sequence of Fig. 14.

Each femtocell 20 stores and manages an URL (advertisement URL) of advertisement contents notified from the advertisement managing server 110 in the above first or second method of distributing an advertisement.

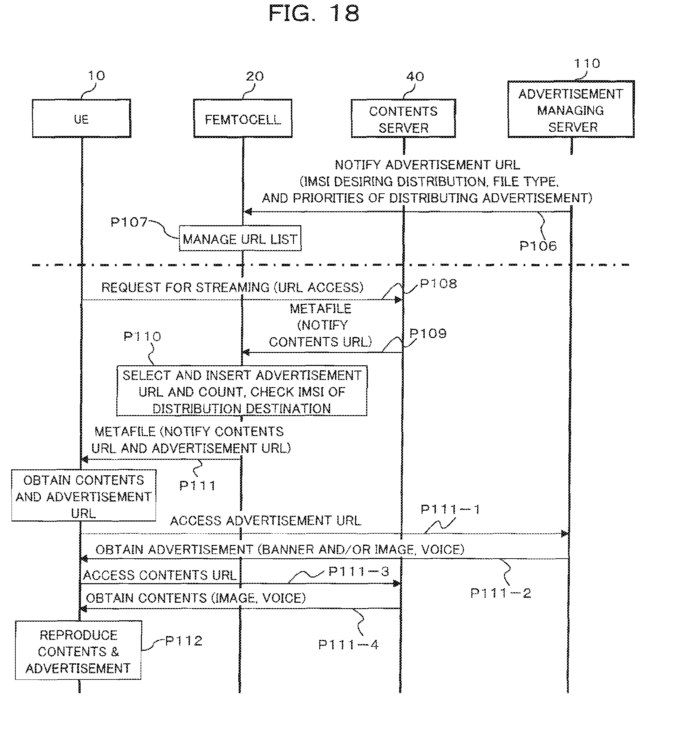

For example, as illustrated in Fig. 18, the advertisement managing server 110 notifies an advertisement URL to a femtocell 20. Along with the advertisement URL, information of a distribution desiring IMSI, the priorities of distributing advertisements, and the format of advertisement contents (file type) may be notified (step P106).

The femtocell 20 stores and manages the advertisement URL notified from the advertisement managing server 110 in the above manner (step P107).

After that, when the UE 10 issues a request for certain media contents (URL) (request for streaming) to the contents server 40 through a femtocell 20 (step P108), the contents server 40 sends the URL of a metafile corresponding to the requested contents to the femtocell 20 (step P109). The URL of a metafile may be managed by a device different from the contents server 40 that manages the URLs of the contents. In the illustrated example, the metafile URLs are assumed to be managed in the same server 40.

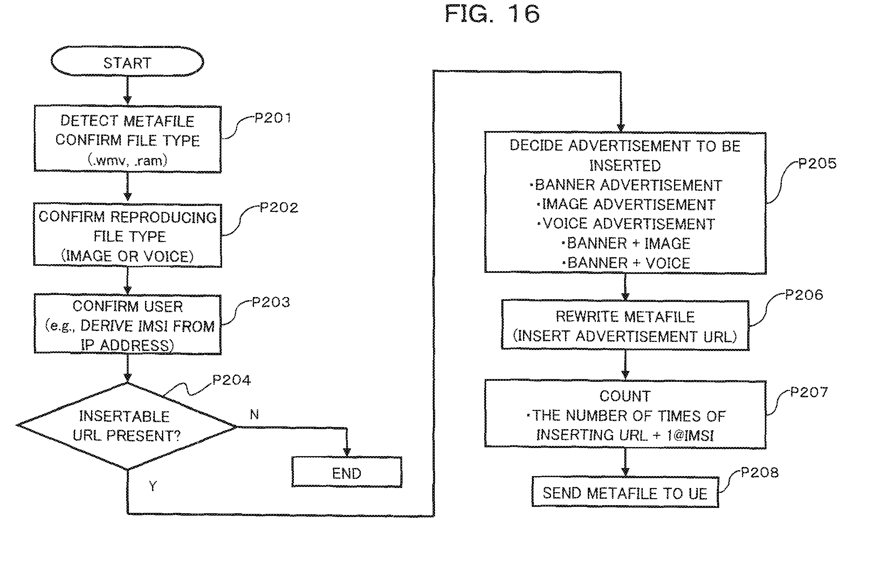

If the data that the femtocell 20 receives from the contents server 40 and destined for a UE 10 is the metafile, the femtocell 20 detects the start of streaming destined for the UE 10 as illustrated in Fig. 16. Upon the start of the detection, the femtocell 20 checks the file type (Windows Media or Real) of the received metafile and various layout descriptions (step P201).

The femtocell 20 checks the form (e.g., image or voice) of advertisement contents to be inserted (step P202), and confirms the user. For example, storing and managing IP address of an accessing UE 10 and the IMSI of the same UE 10 in association with each other, the femtocell 20 can derive the IMSI from the IP address of the data destined for the UE 10 (step P203).

Then the femtocell 20 checks the presence or the absence of an advertisement URL that is to be inserted into the contents destined for the UE 10 (step P204). If a URL is absent, the procedure is terminated (N route of step P204) while if a URL is present, the femtocell 20 determines the advertisement contents to be inserted (from Y route of step P204 to step P205). The advertisement contents include data representing, for example, one of or a combination of two or more of a banner advertisement, an image advertisement, and a voice advertisement.

Here, since an advertisement URL to be inserted varies with contents that a UE 10 is to reproduce, the advertisement URL to be inserted is determined so as to match the file type to be reproduced. The determination can be based on the priority of distributing an advertisement requested from the advertisement managing server 110 or the IMSIs of distribution targets. Any algorithm can be used for the determination.

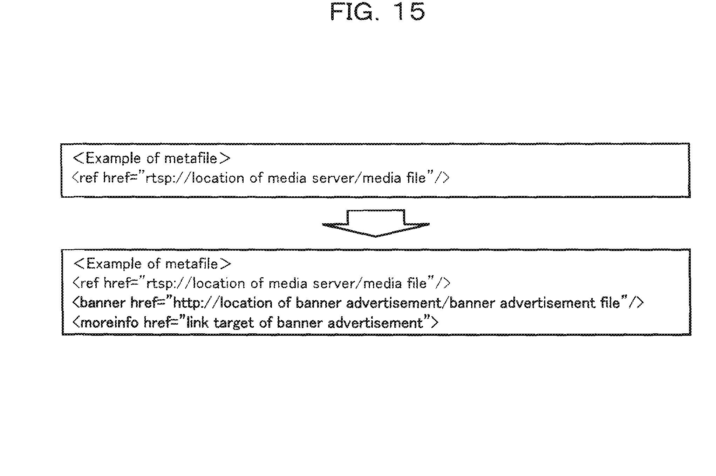

The femtocell 20 rewrites the detected metafile by inserting the determined advertisement URL to the metafile (step P206). In the rewriting, the femtocell 20 checks the form of the advertisement contents indicated by the advertisement URL to be inserted. If the advertisement is voice or video contents, the femtocell 20 describes the metafile such that the advertisement contents are reproduced before or concurrently with reproduction of the contents. In the meantime, if the advertisement contents are a banner, the femtocell 20 varies the layout description of the advertisement contents into one that can be displayed by varying the layout. Fig. 15 illustrates an example of rewriting a metafile such that the banner advertisement can be displayed.

When a metafile is rewritten (an advertisement URL is inserted), the femtocell 20 counts up (increases by one) the number of times of inserting an advertisement URL (step P207) and sends the rewritten URL to the UE 10 (step P208).

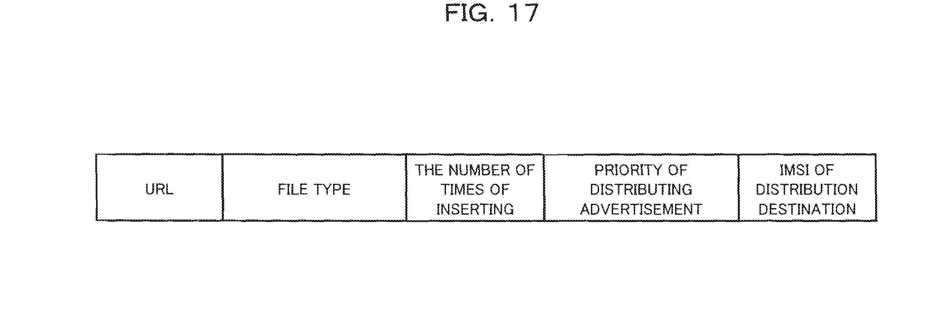

As illustrated in Fig. 17, the femtocell 20 is capable of storing and managing, as parameters, the advertisement URLs, the form (e.g., banner, voice, or image)of the advertisement contents, the number of times of inserting an advertisement URL into a metafile, the priorities of distributing advertisements requested from the advertisement managing server 110, and the IMSI of a target of distribution.

The UE 10 activates the player on the basis of the metafile received from the femtocell 20, accesses the contents URL and the advertisement URL described in the metafile (step P111-1 and step P111-3), receives the contents and the advertisement (step P111-2 and step P111-4), and reproduces the contents and the advertisement (step P112).

### (modification)

The above inserting an advertisement URL can be selectively carried out in accordance with the transmitting source (address information) of the data (contents) to be sent to a UE 10 through a femtocell 20.

For example, inserting an advertisement URL at a femtocell 20 can be limited to contents received from a contents server 40 on the Internet 90 and destined for a UE 10. In other words, no advertisement URL may be inserted into contents received from a contents server 40 or a PC on the LAN 30 but destined for a UE 10. Whether the insertion is carried out or is not carried out can be realized by the setting of advertisement distribution policy of a femtocell 20.

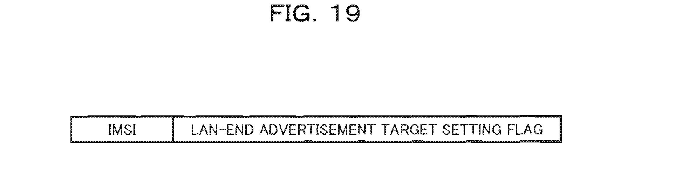

The setting can be accomplished by using a LAN-end advertisement target setting flag prepared for each IMSI as illustrated in, for example, Fig. 19. For example, if an advertisement URL is inserted into a data received from the LAN 30, the setting flag is set to 1 while, if the URL is not inserted, the setting flag is set to 0.

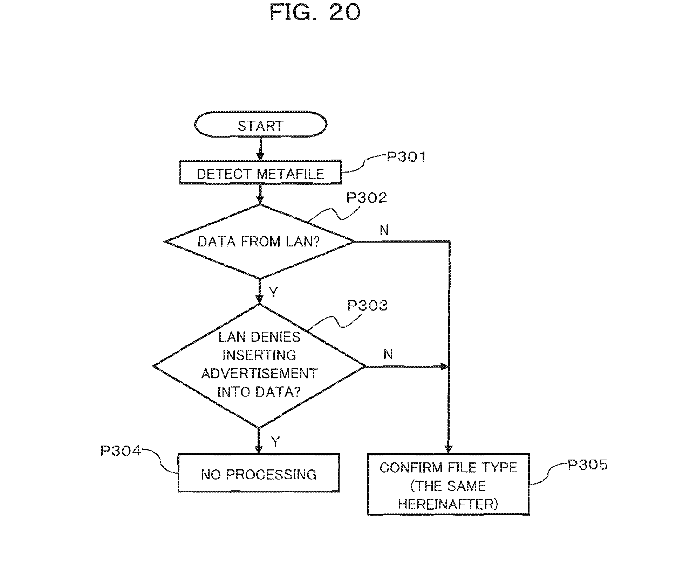

The femtocell 20 determines, on the basis of the setting flag, whether or not an advertisement URL is to be inserted into received data destined for a UE 10. An example of the determination is illustrated in Fig. 20. Upon detection of a metafile serving as received data destined for a UE 10 (step P301), a femtocell 20 checks whether the metafile is data received from the LAN 30 (step P302).

If the metafile is one received from the LAN 30, the femtocell 20 refers to the setting flag and thereby checks whether or not inserting an advertisement URL into data received from the LAN 30 is allowed (from Y route of step P302 to step P303). If the insertion is not allowed, the femtocell 20 does not insert any advertisement URL into the metafile (from Y route of step P303 to step P304) and sends the metafile to the UE 10.

On the other hand, if the received metafile is not one from the LAN 30 or the setting flag allows insertion of an advertisement URL (step P302 or N route of step P303), the femtocell 20 inserts an advertisement URL in the same manner as the above described embodiment (step P305).

### (example of configuration of entities)

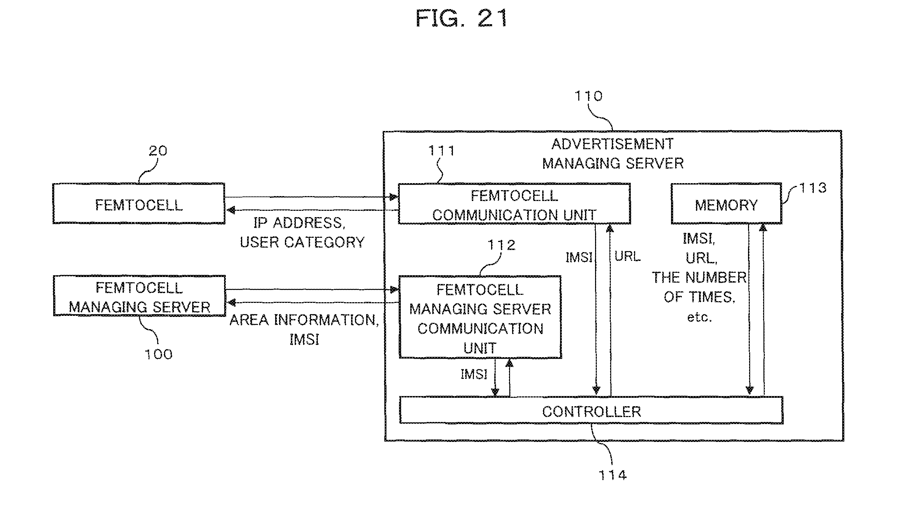

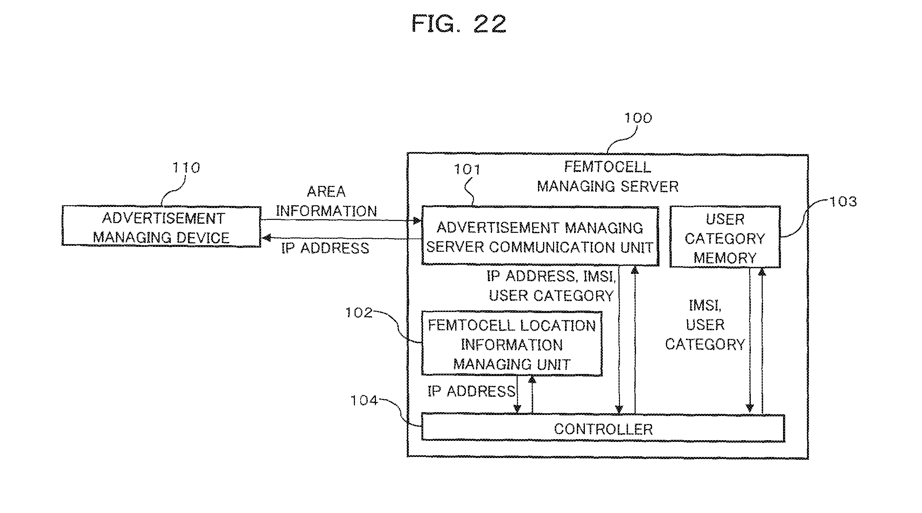

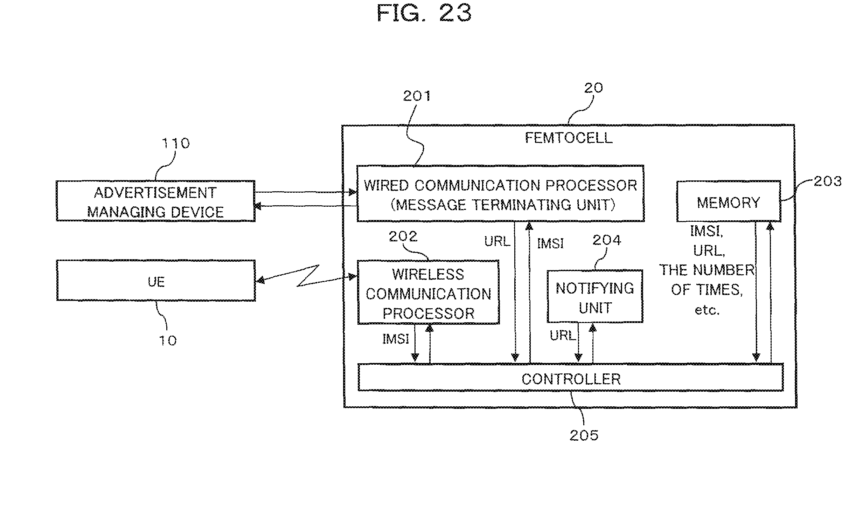

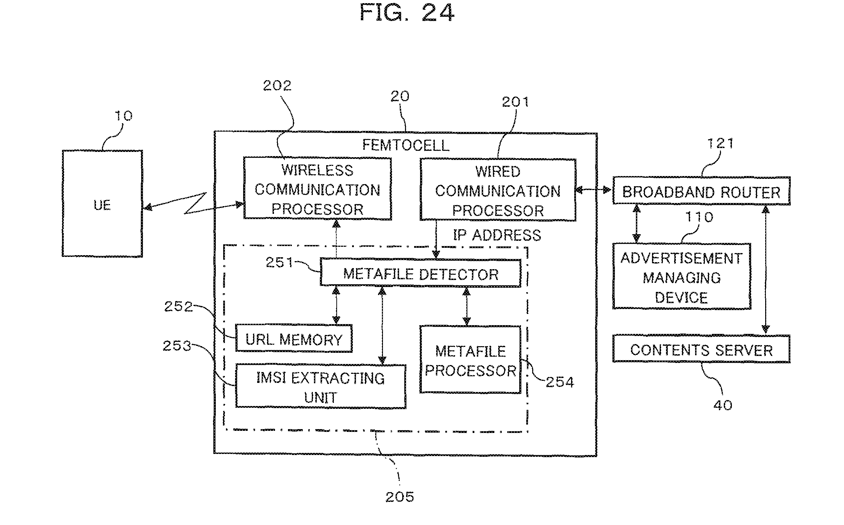

Hereinafter, description will now be made in relation to examples of the configurations of the advertisement managing server 110, the femtocell managing server 100, and a femtocell 20. Fig. 21 illustrates an example of the configurations of the advertisement managing server 110; Figs. 22 and 23 are examples of the configuration of a femtocell 20; and Fig. 24 is an example of the configuration of the femtocell managing server 100 (*sic*, correctly Fig. 22 is an example of the configuration of the femtocell managing server 100; Figs 23 and 24 are examples of the configuration of a femtocell 20).

### (the advertisement managing server 110)

As illustrated in Fig. 21, an advertisement managing server 110 exemplarily includes a femtocell communication unit 111, a femtocell managing server communication unit 112, a memory 113, and the controller 114.

The femtocell communication unit 111 communicates with femtocells 20 through message parameters including, as exemplified by Figs. 7 and 8, IMSIs, advertisement URL, the number of times of advertising (i.e., the number of times of attaching an advertisement URL to media data destined for a UE 10), and others. An IMSI is obtained by terminating a message received from a femtocell 20 and is provided to the controller 114. An advertisement URL to be notified to the femtocell 20 is selected by the controller 114 and is provided to the femtocell communication unit 111.

The femtocell managing server communication unit 112 communicates with the femtocell managing server 100 through message parameters including, as exemplified by Fig. 13, area information (transmitting), an IP address (receiving), an IMSI (transmitting), the user category information (receiving), and others. An IP address and the user category information received in response to the area information and an IMSI transmitted to the femtocell managing server 100 are provided to the controller 114.

The memory 113 stores and manages the information exemplified in Fig. 6 under the control of the controller 114.

The controller 114 controls communication of the respective communication units 111 and 112, and writing into and reading from the memory 113. The controller 114 selects a femtocell 20 to be notified of an advertisement URL on the basis of an IP address received from femtocell managing server 100 in cooperation with the memory 113, selects an advertisement URL destined for the selected femtocell 20, and provides the selected advertisement URL to the femtocell communication unit 111.

Specifically, the controller 114 function as one example of a selecting unit that selects one or more femtocells 20 to be notified of an advertisement URL serving as an example of the advertisement-related data, on the basis of one or more IP addresses serving as an example of the location information of femtocells 20. The femtocell communication unit 111 is used as an example of a notifying unit that notifies the advertisement URL serving as an example of the advertisement-related data, to the femtocells 20 selected by the controller 114 functioning as an example of the selecting unit.

As the femtocells 20 to be notified of an advertisement URL, femtocells 20 conforming to a predetermined condition based on the location information of femtocells 20 and the user category information of UE 10 may be selected as taught in the above second method of distributing an advertisement. The predetermined condition is, for example, to locate in an area to which the advertiser wishes to distribute an advertisement and to confirm the user category.

The controller 114 may calculate the total number of times of distributing an advertisement to UEs 10 on the basis of information that the controller 114 receives via the femtocell communication unit 111. Specifically, the femtocell communication unit 111 functions as an example of a receiving unit that receives notification of the result of counting the number of times of attaching advertisement URL to media data destined for a UE 10 in each femtocell 20 from the femtocell 20. The controller 114 includes an example of a function of a calculating unit that calculates the total of the results of the counting. The calculation may be based on user category information of UEs 10.

### (femtocell managing server 100)

As illustrated in Fig. 22, the femtocell managing server 100 exemplarily includes an advertisement managing server communicating unit 101, a femtocell location information managing unit 102, a user category memory 103, and a controller 104.

The advertisement managing server communicating unit 101 communicates with the advertisement managing server 110 and receives the area information and/or an IMSI from the advertisement managing server 110. The area information is used for address resolution of femtocell 20, and the IMSI is used for user category resolution. These information pieces are provided to the controller 104.

The femtocell location information managing unit 102 stores and manages area information and one or more IP addresses in association with each other. In some schemes of allocating an IP address to a femtocell 20, a single IP address can designate a number of femtocells 20. An unlimited example can use a subnet mask. The controller 104 obtains from the managing unit 102 one or more IP address of one or more femtocells 20 based on area information that the advertisement managing server communicating unit 101 provides. The obtained IP addresses are provided to the advertisement managing server communicating unit 101 and are then notified to the advertisement managing server 110.

The user category memory 103 stores and manages IMSIs and user category information in association with each other. The controller 104 can obtain from the user category memory 103 the user category information based on the IMSI that the advertisement managing server communicating unit 101 provides. The obtained user category information is notified to the advertisement managing server communicating unit 101 and is then notified to the advertisement managing server 110. The user category information can previously be set in the user category memory 103 when a femtocell 20 is installed.

### (femtocell 20)

As illustrated in Figs. 23 and 24, a femtocell 20 exemplarily includes a wired communication processor 201, a wireless communication processor 202, a memory 203, a notifying unit 204, and a controller 205. As exemplarily illustrated in Fig. 24, the controller 205 further includes, a metafile detector 251, an URL memory 252, an IMSI extracting unit 253, and a metafile processor 254.

The wired communication processor 201 communicates with the advertisement managing server 110 and the contents server 40 through a boradband router 121. The communication with the advertisement managing server 110 is carried out through the use of, as exemplified in Figs. 7 and 8, message parameters including an IMSI and an advertisement URL. An advertisement URL is obtained by terminating a message received from the advertisement managing server 110 and is then provided to the controller 205. The controller 205 stores the received advertisement URL in the memory 203.

The wireless communication processor 202 wirelessly communicates with a UE 10 being located in the service area of a femtocell 20. An IMSI can be obtained by, for example, a UE 10 accessing the contents server 40 through the femtocell 20. The obtained IMSI is provided to the controller 205. The controller 205 provides the IMSI to the wired communication processor 201 to thereby notify the ISMI to the advertisement managing server 110.

The memory 203 stores and manages information exemplified in Fig. 9 or 10. The information stored in the memory 203 is obtained through the communication with a UE 10 and/or the advertisement managing server 110.

Upon receipt of contents destined for a UE 10 from the contents server 40, the notifying unit 204 obtains an advertisement URL stored in the memory 203 in cooperation with the controller 204 (*sic*, correctly 205), inserts an advertisement URL that the UE 10 can receive and display into the received contents, and causes the wireless communication processor 202 to send the contents to the UE 10.

The controller 205 controls communication of the wired communication processor 201 and the wireless communication processor 202, processing of the notifying unit 204, and reading information from and writing information into the memory 203. Thereby, the controller 205 controls, for example, inserting an advertisement URL, counting the number of times of inserting an advertisement URL, and calculating the total number.

For example, upon the wired communication processor 201 receives data destined for a UE 10 from the contents server 40, the data is notified to the metafile detector 251 along with the IP address.

The metafile detector 251 checks whether the received data is a metafile for streaming playback. If the data is a metafile, the metafile detector 251 issues inquiry about the IMSI based on the IP address to the IMSI extracting unit 253. Concurrently, the metafile detector 251 issues an inquiry to the URL memory 252 in order to obtain an advertisement URL to be notified.

Here, if an advertisement URL to be inserted is different with contents that a UE 10 is to receive and reproduce, an advertisement URL to be inserted is determined in accordance with the file type that is to be reproduced by the UE 10. The determination is based on priorities of distribution of advertisements requested by the advertisement managing device 110 and an IMSI of the target of distribution. If no advertisement URL is present which corresponds to the IMSI of the target of distribution, the metafile detector 251 forwards the metafile to the wireless communication processor 202 and terminates the procedure.

If a corresponding advertisement URL is present, the metafile detector 251 notifies the metafile and the advertisement URL to the metafile processor 254 to request editing the metafile and URL, and forwards the metafile edited by the metafile processor 254 to the wireless communication processor 202. The metafile detector 251 requests the URL memory 252 to count up the counter of the advertisement URL (the number of times of inserting).

The URL memory 252 stores and manages an advertisement URL, a file type (banner, voice, image, and others), the number of times of inserting a URL into a metafile, and optionally priorities of distributing advertisements requested from the 110 and an IMSI for distribution. With reference to these information piece, the metafile detector 251 determines an advertisement URL to be inserted. Upon receipt of a request for counting up the number of times of inserting an advertisement URL, the metafile detector 251 counts up (+1) the number of inserting.

The metafile processor 254 edits a metafile destined for a UE 10 on the basis of the metafile and the advertisement URL notified from the metafile detector 251, and returns a metafile containing the advertisement URL to the metafile detector 251.

The metafile detector 251 wirelessly transmits the metafile received from the metafile processor 254 or the wireless communication processor 202 to the UE 10.

Specifically, the metafile detector 251, the metafile processor 254, and the wireless communication processor 202 collectively function as an example of a transmitting unit that attaches an advertisement URL serving as an example of the advertisement-related data notified from the advertisement managing device 110 to contents received from the contents server 40 and destined for a UE 20 (*sic*, correctly 10), and transmits the contents to the UE 10. The metafile detector 251 is used as an example of a counting unit that counts the number of times of attaching an advertisement URL for UEs 10 for a predetermined time period. The wired communication processor 201 is used as an example of a notifying unit that notifies the result of the counting to the advertisement managing device 110.

The controller 205 can restrict contents to be attached an advertisement URL to contents which are received from the contents server 40 and which have address information indicates that the contents propagates a particular route. For example, the particular route may be a route through the Internet.

The controller 205 may have a function of an example of a selecting unit that selects (determines) an advertisement URL to be attached to the contents received from the contents server 40 according to predetermined priority order of a number of advertisement URLs (priorities of distributing advertisements). The information of the priority order can be, for example, notified from the advertisement managing device 110. In this case, the wired communication processor 201 is also used as an example of a receiving unit that receives notification of the priority order from the advertisement managing device 201(sic, correctly 110).

As the above, according to the system of the embodiment, when a UE 10 is communicating through a femtocell 20, the femtocell 20 can manage and control an advertisement (URL) to be inserted into the communication. Thereby, the details of an advertisement distributed to UEs 10, the number of times of distributing the advertisement, the user category of UEs 10 to which the advertisement is distributed and others can be calculated.

## Claims

1. A communication system comprising:
a plurality of wireless stations;
one or more user devices each of which wirelessly communicates with one of the plurality of wireless stations;
a contents providing device that provides contents that each of the user devices requests to the user device via one of the plurality of wireless stations; and
an advertisement managing device that manages advertisement-related data including data related to at least one of an advertisement and a questionnaire to the user device, wherein
the advertisement managing device selectively notifies one or more of the plurality of wireless stations of the advertisement-related data on the basis of information about locations of the plurality of wireless devices,
the one or more wireless stations
attach the advertisement-related data notified by the advertisement managing device to the contents destined for the user devices, the contents being received by the contents providing device, and sends the contents attached the advertisement-related data to the user device, and
count the number of times of attaching the advertisement-related data for the user device and notifies the result of counting to the advertisement managing device.

2. The communication system according to claim 1, wherein at least one of the contents and the advertisement-related data is data containing one or more of image, voice, and music.

3. The communication system according to claim 1 or 2, wherein the advertisement managing device calculates the total of the results of the counting notified from the respective wireless stations.

4. The communication system according to claim 4 (sic, correctly 3), wherein the calculating is based on information of category of the user devices.

5. The communication system according to one of claims 1-4, wherein the advertisement managing device selects one or more wireless stations that satisfy a predetermined condition based on the information of the locations of the plurality of wireless stations and the information of category of the user devices as the one or more wireless stations to be notified of the advertisement-related data.

6. The communication system according to claim 4 or 5, wherein the category includes one or more of gender, age, and occupation of users of the user devices.

7. The communication system according to claim 1, wherein the plurality of wireless stations convert the contents destined for the user device in such a format that the user device is capable of reproducing the second data (sic, correctly advertisement-related data) in response to reproducing the contents.

8. The communication system according to claim 1, wherein the contents that the one or more wireless stations attach the advertisement-related data to is limited to contents having address information indicating that the contents propagates a particular route.

9. The communication system according to claim 1, wherein the advertisement-related data that the one or more wireless station attaches to the contents is selected among a plurality pieces of the advertisement-related data on the basis of predetermined priorities of the plurality pieces of the advertisement-related data.

10. An advertisement managing device included in a communication system including a plurality of wireless stations, one or more user devices each of which wirelessly communicates with one of the plurality of wireless stations; a contents providing device that provides contents that each of the user devices requests to the user device via one of the plurality of wireless stations; and the advertisement managing device that manages advertisement-related data including data related to at least one of an advertisement and a questionnaire to the user device, the advertisement managing device comprising:
a selecting unit that selects one or more of the plurality of wireless stations to be notified of the advertisement-related data on the basis of information about locations of the plurality of wireless stations; and
a notification unit that notifies the wireless stations selected by the selecting unit of the advertisement-related data.

11. The advertisement managing device according to claim 10, wherein at least one of the contents and the advertisement-related data is data containing one or more of image, voice, and music.

12. The advertisement managing device according to claim 10 or 11, further comprising:
a receiving unit that receives results of counting the number of times that each of the plurality of the wireless stations attaches the notified advertisement-related data to the contents destined for the user devices from the wireless station; and
a calculating unit that calculates the total of the results of counting.

13. The advertisement managing device according to claim 12, the calculating unit calculates the total based on the information of category of the user devices.

14. The advertisement managing device according to one of claims 10 through 13, the selecting units selects one or more wireless stations that satisfy a predetermined condition based on the information of the locations of the plurality of wireless stations and the information of category of the user devices as the one or more wireless stations to be notified of the advertisement-related data.

15. The advertisement management device according to claim 13 or 14, wherein the category includes one or more of gender, age, and occupation of users of the user devices.

16. A wireless station included in a communication system including a plurality of the wireless stations; one or more user devices each of which wirelessly communicates with one of the plurality of wireless stations; a contents providing device that provides contents that each of the user devices requests to the user device via one of the plurality of wireless stations; and an advertisement
managing device that manages advertisement-related data including data related to at least one of an advertisement and a questionnaire to the user device, the wireless station comprising:
a transmitting unit that attaches the advertisement-related data notified by the advertisement managing device to the contents destined for the user devices, the contents being received by the contents providing device, and sends the contents attached the advertisement-related data to the user device;
a counting unit that counts the number of times of attaching the advertisement-related data for the user device for a predetermined time period; and
a notifying unit that notifies the result of the counting to the advertisement managing device.

17. The wireless station according to claim 16, wherein the contents to which the transmitting unit attaches the advertisement-related data is limited to contents having address information indicating that the contents propagates a particular route.

18. The wireless station according to claim 17, wherein the particular route is a route through the Internet.

19. The wireless station according to claim 18, further comprising a selecting unit that selects the advertisement-related data to be attached to the contents on the basis of priorities of a plurality of the advertisement-related data.

20. The wireless station according to claim 19, further comprising a receiving unit that receives the priorities from the advertisement managing device.
